# EUROPEAN PATENT SPECIFICATION

(11) **EP 3 257 407 B1**
(45) Date of publication and mention of the grant of the patent: **27.01.2021**
(21) Application number: 16192958.3
(22) Date of filing: 07.10.2016
(51) Int. Cl.: A47G 23/06, B32B 3/30, B29C 43/18, B29C 43/20, B32B 27/40, B32B 27/08, B32B 5/26, B32B 27/12, B32B 27/36, B29C 45/14, B32B 3/02, B32B 5/02, B32B 1/00

(54) **SERVING TRAY WITH INNER RAISED SURFACE AND METHODS FOR MANUFACTURING THE SAME**
SERVIERTABLETT MIT ERHOBENER INNENOBERFLÄCHE UND VERFAHREN ZUR HERSTELLUNG DAVON
PLATEAU DE SERVICE PRÉSENTANT UNE SURFACE INTERNE EN RELIEF ET SES PROCÉDÉS DE FABRICATION

(30) Priority: 17.06.2016 US 201615185568
(43) Date of publication of application: 20.12.2017
(73) Proprietor: Cambro Manufacturing Company, Huntington Beach, CA 92647-2056 (US)
(72) Inventor: Baez, Jorge, Lake Forest, CA 92631 (US)
(74) Representative: Alves Moreira, Pedro

(56) References cited:
- WO-A1-00/05140
- CN-U- 202 207 061
- JP-A- 2002 019 761
- US-A1- 2013 076 054
- US-A1- 2014 335 319
- US-A1- 2015 305 535

## Description

### Background

### Field of the Technology

The invention relates to the field of plastic trays and methods for manufacturing the same.

### Description of the Prior Art

Serving trays have long been used in a variety of settings including cafeterias, hospitals, hotels, bars, and restaurants. Many of these serving trays are comprised of plastic or plastic composites including polyester resin and other variations of polyethylene. Other trays may comprise one or more layers of fiberglass strand mats blended into their structure for increased structural strength and durability.

Many trays currently in use comprise a textured, upward facing surface which aides in the prevention of items which are placed on the tray from sliding or moving about when the tray is moved or carried. Typically, a textured surface is formed or defined in the top surface of the tray itself and is usually in the form of a series of ridges or protrusions which interact with a bottom surface of an item which is placed on the tray. Other trays do not comprise any textured surface at all but instead comprise a mat made of rubber, cork, or other suitable material which is then laid directly and/or adhered onto the tray. The textured surface or mat then serves to help maintain any item placed on the tray in a fixed position.

PCT Application WO 00/05140 A1, entitled "Food Service Tray" by Traymax Inc (US), Ridgeway John Mark (US) and Wood James Robert (US) relates to a tray for carrying food and beverage in the food service industry, having a substantially planar tray bottom portion and an upwardly extending peripheral sloping wall.

Japanese Patent Application JP 2002 019761 A, entitled "Synthetic Resin Tray" by Kureha Elastomer Co Ltd, Sumino Kako KK, Kokusai Kako KK and Shima Boeki KK relates to a synthetic resin tray on the surface of a button plate of a tray body molded as a container having a shallow bottom using synthetic resin as a raw material.

US Patent Application US 2015/305535 A1, entitled "Serving Tray" by De Vries Tim Ewout (NL) Et Al relates to a serving tray who has a top and a bottom sides, parallel to each other and a periphery. The tray has a center of gravity and an axis extending substantially perpendicular through it.

While serving trays with raised or textured surfaces have helped reduce instances of items placed on trays such as plates, glasses, and other dishware from slipping and/or breaking, they are not completely fool proof and can still lead to unnecessary accidents and increased costs. Condensation which has formed on the outside surfaces of glasses can run down into the raised textured surface of the tray and make them slick thus increasing the chances that a glass may slide or tip over when the tray is being moved. Rubber and cork insert layers can break down over time after repeated exposure to moisture which reduces the overall durability and effective lifetime of the tray, forcing the user to discard or refurbish the tray at greater expense.

What is needed is a serving tray comprising a textured surface that is not subject to the limitations of the previous art and which is capable of sustaining a glass or other object at an upright orientation regardless of condensation or other environmental factors. Additionally, a plurality of methods of manufacturing are needed in order to produce such a tray.

### Brief Summary

The current invention is a serving tray according to claim 1 which includes a top surface, a bottom surface disposed on an opposing side of the top surface, and a raised edge disposed about the top surface. The tray also includes an inner support structure disposed circumferentially around the top surface. Disposed within the raised edge are at least two elongated lips, while the top surface has a textured relief defined into it. Both the top surface and the bottom surface are made of at least one synthetic material, while the textured relief is made from an insert that is integrally bonded with the at least one synthetic material.

In one embodiment, the insert of the tray which is integrally bonded with the at least one synthetic material is specifically made of a sheet of thermoplastic polyurethane (TPU).

In another embodiment, the inner support structure of the tray includes a protrusion in its surface which provides an upward facing edge around the circumference of the top surface of the tray.

In yet another embodiment, the inner support structure of the tray is disposed on the raised edge and above the top surface.

The tray is made from a number of synthetic layers including at least two layers of randomly distributed and continuous glass fiber filament sheets, at least two layers of crisscrossed interlocking glass fiber sheets with a chemical binder, and an interstitial layer of polycarbonate resin.

In one embodiment, the tray further includes a shaped smooth boundary portion that is located between the textured surface and the inner support structure on the raised edge on the top surface.

In yet another embodiment, the textured relief includes a number of raised protrusions and a number of recessed indentations that are asymmetrically disposed over the top surface.

The invention also includes a method of making a friction enhanced tray in a compression molding apparatus according to claim 7 The method includes placing an insert on top of a lower tool portion of the compression molding apparatus, layering at least two layers of randomly distributed and continuous glass fiber filament sheets on top of the insert, and then layering at least two layers of crisscrossed interlocking glass fiber sheets with a chemical binder on top of the insert. Next, an interstitial layer of polycarbonate resin is disposed between the at least two layers of crisscrossed interlocking glass fiber sheets with a chemical binder. The insert, the least two layers of randomly distributed and continuous glass fiber filament sheets, the at least two layers of crisscrossed interlocking glass fiber sheets with a chemical binder, and the interstitial layer of polycarbonate resin are then compressed against the lower tool portion of the compression molding apparatus and which also defines an inner support structure in the friction enhanced tray. Finally, a textured relief is defined within the insert.

In one embodiment, the method step of defining the textured relief within the insert includes impressing a chemically etched mold surface disposed on the lower tool portion into a surface of the insert.

In another embodiment, the method step of compressing the insert and defining an inner support structure in the friction enhanced tray specifically includes defining the inner support structure above the insert on a raised edge that is disposed around the circumference of the insert. Defining the inner support structure above the insert on a raised edge that is disposed around the circumference of the insert further includes defining a protrusion along the length of the inner support structure.

In yet another embodiment, the method also includes defining a shaped smooth boundary portion that is disposed around the textured relief defined in the insert and beneath the inner support structure.

In a further embodiment, the method step of placing the insert on top of a lower tool portion of the compression molding apparatus specifically includes placing a sheet of thermoplastic polyurethane (TPU) on top of the lower tool portion of the compression molding apparatus.

Finally, in a further embodiment the method step of defining a textured relief within the insert includes asymmetrically defining a plurality of raised protrusions and a plurality of recessed indentations into a surface of the insert.

### Brief Description of the Drawings

Fig. 1 is a perspective view of a serving tray of the current invention.
Fig. 2 is a top view of the serving tray seen in Fig. 1.
Fig. 3 is a bottom view of the serving tray seen in Fig. 1.
Fig. 4 is a block diagram showing of a compression molding device used to fabricate the serving tray seen in Fig. 1.

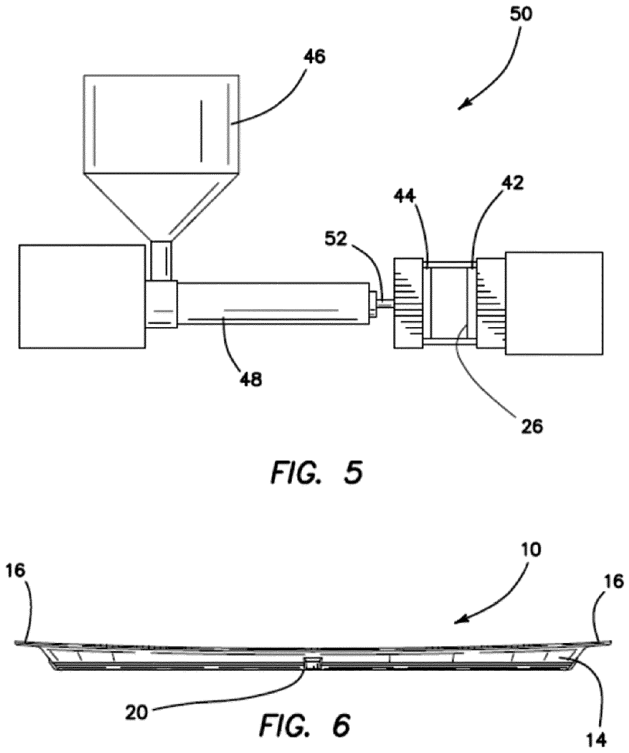

Fig. 5 is a block diagram showing the configuration of an injection molding device used to fabricate the serving tray seen in Fig. 1.
Fig. 6 is a side elevational view of the serving tray seen in Fig. 1.
Fig. 7A is a cross sectional view of the serving tray seen in Fig. 6.
Fig. 7B is a magnified cross sectional view of surface of the serving tray seen in Fig. 7A.
Fig. 8 is a side elevational view of a plurality of serving trays seen in Figs. 1 and 6 when stacked or nested within one another.
Fig. 9A is a cross sectional view of the plurality of stacked or nested serving trays seen in Fig. 8.
Fig. 9B is a magnified cross sectional view of the stacked or nested surfaces of the plurality of serving trays seen in Fig. 9A.

The disclosure and its various embodiments can now be better understood by turning to the following detailed description of the preferred embodiments which are presented as illustrated examples of the embodiments defined in the claims. It is expressly understood that the embodiments as defined by the claims may be broader than the illustrated embodiments described below.

### Detailed Description of the Preferred Embodiments

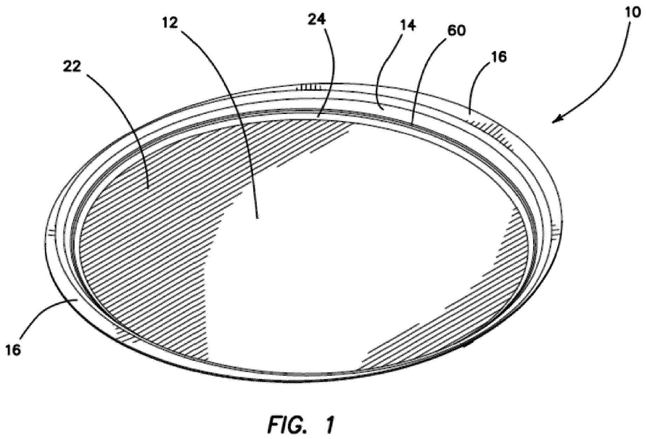

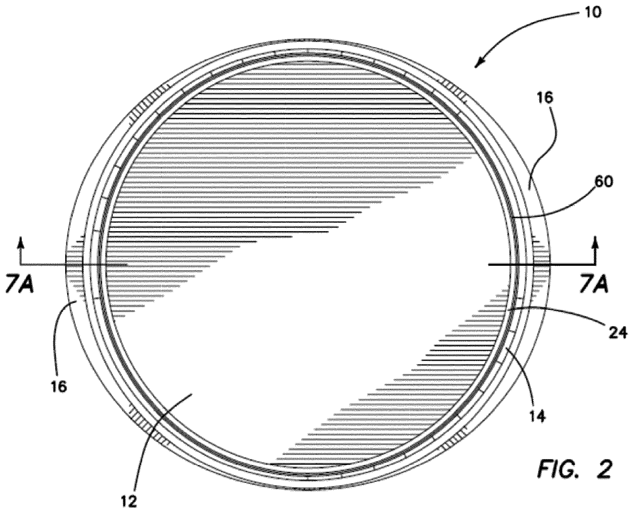

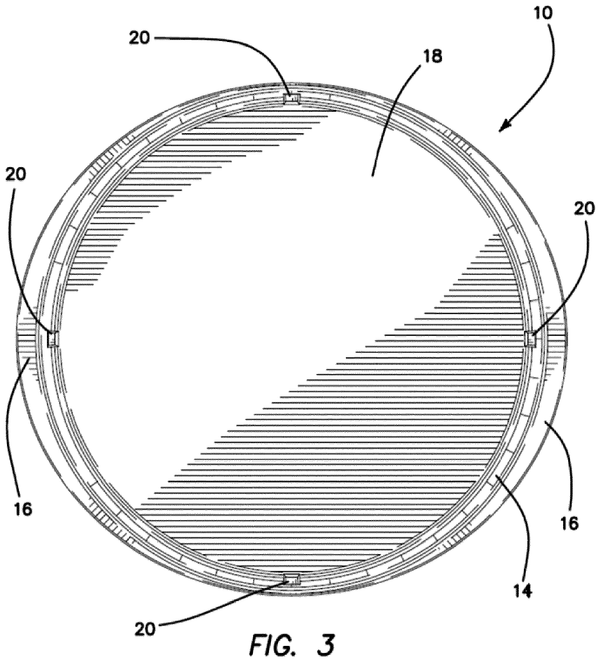

The current invention comprises a manufactured serving tray which may be seen in Figs. 1-3 and which is denoted generally under reference numeral 10. As seen in Figs. 1-3, the tray 10 is substantially circular shaped, however other shapes known in the art such as rectangles, squares, and the like may be used without departing from the scope of the invention. The tray 10 comprises a top surface 12 which is surrounded circumferentially by a raised edge 14. The raised edge 14 begins at the outer edge of the top surface 12 and is disposed at an angle relative to the top surface 12 which is substantially horizontal or flat. The raised edge 14 further comprises at least two elongated lips 16 which are diametrically disposed across the tray 10. Each lip 16 represents a bulge or increased surface area portion compared to the rest of the raised edge 14 as best seen in the top down view of Fig. 2 that is orientated substantially perpendicular to the inclined orientation of the raised edge 14. The tray 10 also comprises a bottom surface 18 as seen in Fig. 3. The bottom surface 18 further comprises a plurality of feet 20 disposed in a symmetrical pattern around the circumference of the bottom surface 18. The plurality of feet 20 help keep the tray 10 in a fixed position when placed on a table or other horizontal surface as is known in the art.

As best seen in Fig. 2, the top surface 12 is substantially round or circular shaped, while the lips 16 help form or stretch the overall shape of the raised edge 14 a substantially oval or oblong shape, thus creating an oval or oblong shaped upper profile of the tray and a circular shaped lower profile of the tray. The oblong shaped upper profile of the tray 10 comprising the lips 16 allows a user to easily grip and carry the tray 10 when glassware and other items on placed on its top surface 12 while the circular lower profile of the tray 10 allows multiple trays to be stacked or nested within one another without regard to each successive tray's 10 orientation with regard to each other. In other words, when a second tray is placed on top of the first tray 10, the circular lower profile of the second tray fits easily and snuggly on top of the top surface 12 and within the confines of the raised edge 14 of the first tray 10 regardless of which direction the lips 16 are currently orientated in. This therefore allows a plurality of trays 10 to be quickly and efficiently stacked upon each other when the trays 10 are not in use or when held in storage.

The tray 10 further comprises a textured relief 22 defined into the top surface 12. The textured relief 22 preferably comprises a plurality or sequence of raised ridges or protrusions and a corresponding plurality of recessed indentations or depressions distributed about the top surface 12 in an asymmetrical pattern, however other similar or equivalent relief patterns now known or later devised may be used without significantly departing from scope of the invention. The textured relief 22 is configured to dramatically increase the coefficient of friction of the top surface 12 so that when glassware or other items are placed upon it, the item will remain frictionally engaged and motionless on the top surface even when the tray 10 is titled at an angle of up to and including 45 degrees relative to the horizontal. The textured relief 22 is defined across the substantial majority of the top surface 12, however as best seen in Fig. 2, the textured relief 22 ends at a specified distance away from the beginning of the raised edge 14, thus leaving a shaped smooth boundary portion 24 disposed about a circumference of the tray 10 between the relief portion 22 and the raised edge 14.

As also seen in Figs. 1 and 2, the tray 10 further comprises an inner support structure 60. The inner support structure 60 is a substantially ring or annular shaped protrusion that is elevated or raised with respect to the surface of the raised edge 14. The inner support structure 60 is disposed along the surface of the raised edge 14 and above the top surface 12 and smooth boundary portion 24. As best seen in Fig. 2, the inner support structure 60 is disposed about the entire inner circumference of the tray 10.

The majority of the tray 10 is preferably comprised of successive layers of plastic or plastic composites as will be detailed further below, however disposed at or on the top surface 12 is preferably an insert 26 comprising at least one layer of thermoplastic polyurethane (TPU). As is known in the art, TPU is part of a class of polyurethane plastics which has a high shear strength and a high elasticity, making it ideal for being used in a molding process. TPU is also highly resistant to liquids, oil, and grease, thus further making it suitable for use in the food and beverage industry where contact with various liquids or oils is commonplace. When an item such as a glass, cup, or other dishware is placed on the tray 10 that comprises an insert 26 comprised of TPU that is integrally bonded with the top surface 12, the item will remain upright on the tray 10 even when the tray 10 is tilted at an angle of up to 45 degrees from the horizontal. Because of the ability of TPU to resist liquid, the tray 10 comprising a TPU top surface 12 will also maintain the item in an upright position even if that item is wet, condensation has formed on the item, or if liquid has been spilled on the top surface 12 of the tray 10.

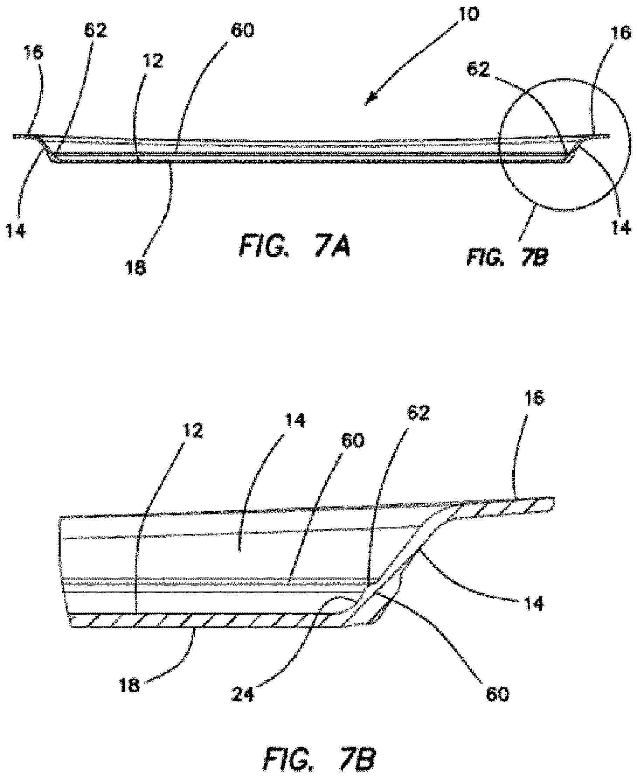

Greater detail of the inner support structure 60 may be seen in Figs. 7A and 7B. The inner support structure 60 is disposed about the circumference of the tray 10 at a constant elevation above the top surface 12 and along the inner surface of the raised edge 14. As best seen in the magnified view of Fig. 7B, the inner support structure 60 specifically comprises a protrusion or bump 62 which provides a localized increased thickness to the raised edge 14, thus creating an upward facing edge or surface around the inner circumference of the serving area of the tray 10.

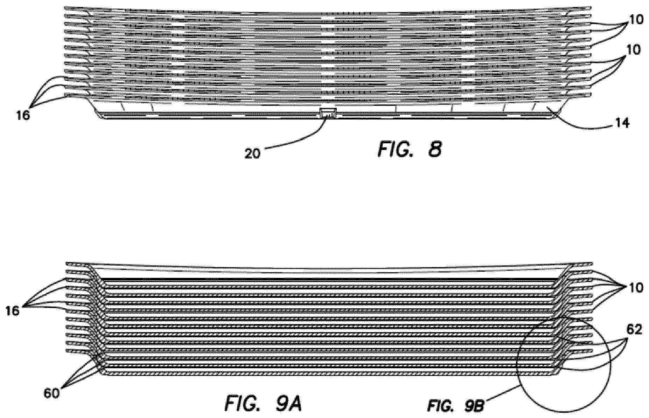

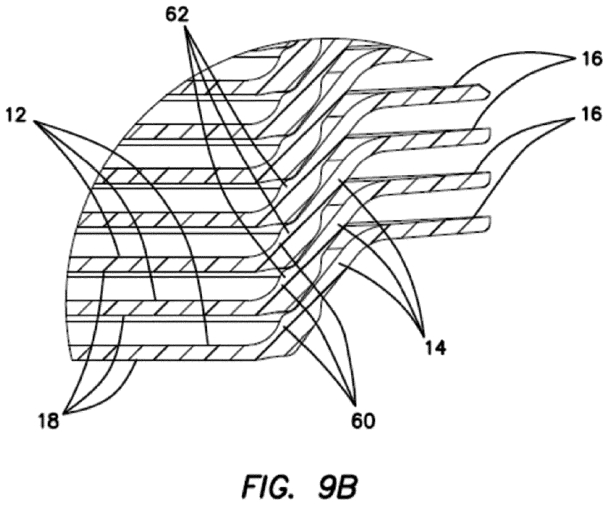

Having an inner support structure 60 aides in the ability of a plurality of trays 10 to be nested or stacked as seen in Figs. 8, 9A, and 9B. Figs. 8 and 9A show that when a plurality of trays 10 are stacked vertically on one another, each subsequent tray 10 is placed within the tray 10 disposed directly beneath it, specifically with the bottom surface 18 of the nested tray 10 being disposed within the enclosed circumference formed by the raised edge 14 of the tray 10 beneath it. The magnified cross section of Fig. 9B shows that when the bottom surface 18 of a tray 10 to be stacked is placed into a tray 10 disposed beneath it, it comes to rest on top of the inner support structure 60. More specifically, the bottom surface 18 rests upon the upward facing surface of the protrusion 62. Because the inner support structure 60 is disposed around the circumference of the tray 10, any subsequent tray 10 which is nested within it will be maintained at a constant elevation that is above that of the top surface 12 of the bottom tray 10. The process may be repeated for each subsequently nested tray 10 with the bottom surface 18 of each tray 10 resting on the inner support structure 60 of the tray 10 disposed directly beneath it so that a stack is formed as seen in Figs. 8 and 9A. Having each tray 10 maintained at a raised elevation with respect to the tray 10 beneath it when in a stacked configuration allows the plurality of trays 10 to be easily stacked in a stable position. Additionally, because each tray 10 is maintained at a fixed elevated position, the lips 16 of each tray 10 are also maintained at a fixed elevated position with respect to one another as seen in Fig. 9B, thus allowing a user to easily and quickly grab a single tray 10 by grabbing the corresponding lip 16 and lifting upwards. The inner support structure 60 of the current tray 10 thus prevents the plurality of trays 10 from becoming wedged or stuck together when placed in a stacked configuration.

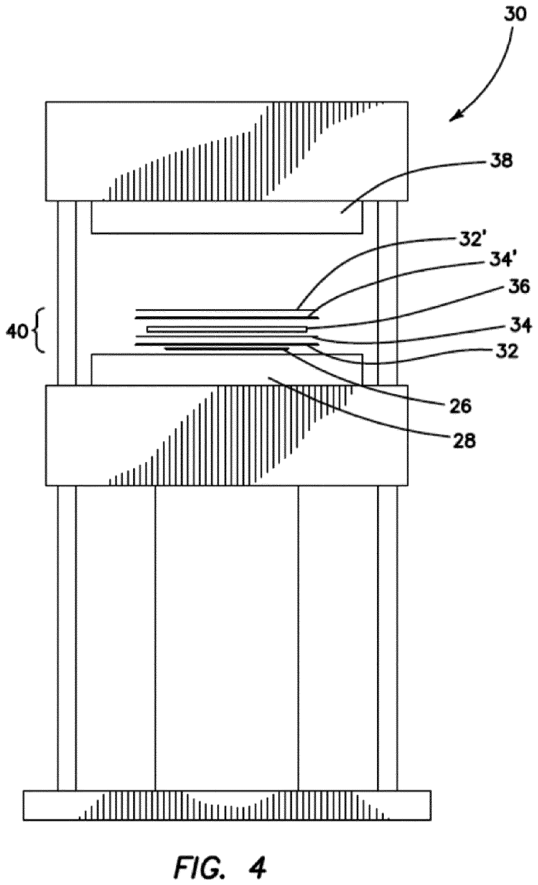

The tray 10 may be manufactured according to a compression wet molding process. In the embodiment as seen in Fig. 4, ; which is not an embodiment according to the claimed invention, an insert 26 comprising a sheet of TPU is placed on a lower tool 28 of a compression manufacturing device shown generally as reference numeral 30. The TPU sheet 26 preferably comprises a durometer value of 65A to 85D and an overall thickness of 0.005 in. to 0.060 in., however other durometer or thickness values may be used without significantly departing from the scope of the claim. A first surmat or fiberglass veil 32 is placed over the TPU sheet 26, followed by a first chopped strand mat 34. A portion of liquid state polyester resin 36 is then evenly or symmetrically distributed over the first chopped strand mat 34. Next, a second chopped strand mat 34' is placed over the now resin covered first chopped strand mat 34. Finally, a second surmat or fiberglass veil 32' is layered on the second chopped strand mat 34', thus completing a fully formed stack or sandwich 40 which is used to form the tray 10. Alternatively, the TPU sheet 26 may be placed directly on the lower tool 28 while the sandwich 40 comprising the first and second surmat 32, 32', the first and second chopped strand mat 34, 34' and the resin 36 is formed at a separate location. The resin 36 is preferably an interstitial resin, meaning the resin 36 is allowed to flow and completely fill in the volume defined between the first and second chopped strand mats 34, 34'. The formed sandwich 40 as single unit may then be moved to the compression manufacturing device 30 and placed on the TPU sheet 26. After all the layers of the tray 10 are in place, the compression manufacturing device 30 is activated and an upper tool 38 moves downward and presses the sandwich 40 and TPU sheet 26 against the lower tool 28, compressing the layers into a shape as dictated by the shape of the lower and upper tools 28, 38. As the layers of the tray 10 are being compressed, each layer of the tray are pressed together and a mechanical bond is formed between each subsequent layer, including the TPU sheet 26 which becomes an integral part of the structure of the tray 10. At the same time, the lower tool 28 which comprises a chemically etched mold for the top surface 12 of the tray 10, presses into the TPU sheet 26 deep enough to sufficiently form the textured relief 22, preferably to a depth range from 0.05 mm to 0.635 mm (0.002 in. to 0.025 in.) . The mold etched into the surface of the lower tool 28 is configured so as to form the smooth portion 24 and the support structure 60. Having a smooth portion 24 located on the top surface 12 of the tray 10 is critical since it creates a buffer zone disposed between the support structure 60 and the textured relief 22. Resin 36 which leaks or is pushed out by the compression process is stopped by the mold of the lower tool 28 which prevents the resin 36 from interfering with the fabrication of the textured relief 22. If resin 36 is allowed to seep onto the top surface 12 as the textured relief 22 is being formed, the resin 36 will be compressed into the TPU sheet 26 and the various ridges, protrusions, indentations, and depressions which comprise the textured relief 22 will be filled in or covered by the resin 36, thus effectively spoiling the desired friction profile of the textured relief 22. Once compression is complete, the upper tool 38 is drawn away from the lower tool 28 and the now fully formed tray 10 may be lifted up off the lower tool 28 and removed from the compression manufacturing device 30. A user may then repeat the process and create additional trays 10 as needed.

The first and second chopped strand mat 34, 34' are preferably comprised of crisscrossed, interlocking glass fibers with a chemical binder which holds the glass fibers together in sheet form. Depending the density of the glass fibers, each chopped strand mat 34, 34' may have a weight of 1.25, 1.5, 1.75, or 2 ounces per square foot. In contrast, the first and second surmat 32, 32' are comprised of continuous glass fiber filaments that are randomly distributed and bonded together with a specially formulated resin or binder. The first and second surmats 32, 32' bring the resin 36 to the surface of the tray 10 and improves the overall surface appearance of the tray 10. Each surmat 32, 32 preferably has a thickness that is between 7mm / 28.0 g/m² (2.6 grams per square foot) to 30mm / 104.4 g/m² (9.7 grams per square foot.) . Both the chopped strand mats 34, 34' and the surmats 32, 32' each comprise sizing which is a silane coupling agent. The sizing helps form the necessary bond between the fiber glass filaments of the surmats 32, 32' and chopped strand mats 34, 34' with the resin 36 in order to produce the tray 10.

While the insert 26 has been described above as comprising a sheet of TPU which is used as the top most additive added to the composition of the tray 10, similar or additional materials may also be used without departing from the scope of the invention. For example, the insert may comprise other materials such as rubber, silicone, paper coated with polyurethane, a styrene acrylonitrile (SAN) sheet coated with polyurethane, or a combination thereof.

Similarly, while epoxy resins has been described above as being used as forming the main composition of the tray 10, this is meant to be for illustrative purposes only. Similar or additional substances other than what is disclosed above may also be used without departing from the scope of the invention, for example thermoset matrix resins, vinyl ester, or unsaturated polyester. More specifically, the type of unsaturated polyester used may include but is not limited to bispheon A fumerate, DCPD-modified, fire-retardant, isophthalic, low-VOC or no VOC, orthophthalic, or terephthalic unsaturated polyesters, or a combination thereof.

Many alterations and modifications may be made by those having ordinary skill in the art without departing from the scope of the embodiments. Therefore, it must be understood that the illustrated embodiment has been set forth only for the purposes of example and that it should not be taken as limiting the embodiments as defined by the following embodiments and its various embodiments.

Therefore, it must be understood that the illustrated embodiment has been set forth only for the purposes of example and that it should not be taken as limiting the embodiments as defined by the following claims.

## Claims

1. A serving tray (10) comprising:
a top surface (12);
a bottom surface (18) disposed on an opposing side of the top surface (12);
a raised edge (14) disposed about the top surface (12);
at least two elongated lips (16) disposed within the raised edge (14);
a textured relief (22) defined into the top surface (12),
wherein the top surface (12) and the bottom surface (18) are comprised of at least one synthetic material;
**characterized in that** it further comprises an inner support structure (60) disposed circumferentially around the top surface (12); wherein the textured relief (22) is comprised of an insert (26) integrally bonded with the at least one synthetic material, and the tray (10) is comprised of a plurality of synthetic layers comprising at least two layers of randomly distributed and continuous glass fiber filament sheets, at least two layers of crisscrossed interlocking glass fiber sheets with a chemical binder, and an interstitial layer of polycarbonate resin..

2. The tray (10) of claim 1 wherein the insert (26) integrally bonded with the at least one synthetic material is comprised of a sheet of thermoplastic polyurethane (TPU).

3. The tray (10) of claim 1 wherein the inner support structure (60) comprises a protrusion (62) in its surface which provides an upward facing edge around the circumference of the top surface (12).

4. The tray (10) of claim 1 wherein the inner support structure (60) is disposed on the raised edge (14) and above the top surface (12).

5. The tray (10) of claim 1 further comprising a shaped smooth boundary portion (24) disposed between the textured surface (22) and the inner support structure (60) on the raised edge (14) on the top surface (12).

6. The tray (10) of claim 1 wherein the textured relief (22) comprises a plurality of raised protrusions (62) and a plurality of recessed indentations asymmetrically disposed over the top surface (12).

7. A method of making a friction enhanced tray in a compression molding apparatus (30), **characterized in that** it comprises:
placing an insert (26) on top of a lower tool portion of the compression molding apparatus (30);
layering at least two layers of randomly distributed and continuous glass fiber filament sheets on top of the insert (26);
layering at least two layers of crisscrossed interlocking glass fiber sheets with a chemical binder on top of the insert (26);
disposing an interstitial layer of polycarbonate resin between the at least two layers of crisscrossed interlocking glass fiber sheets with a chemical binder;
compressing the insert (26), the least two layers of randomly distributed and continuous glass fiber filament sheets, the at least two layers of crisscrossed interlocking glass fiber sheets with a chemical binder, and the interstitial layer of polycarbonate resin against the lower tool (28) portion of the compression molding apparatus (30) and defining an inner support structure (60) in the friction enhanced tray; and
defining a textured relief (22) within the insert (26).

8. The method of claim 7 wherein defining the textured relief (22) within the insert (26) comprises impressing a chemically etched mold surface disposed on the lower tool (28) portion into a surface of the insert (26).

9. The method of claim 7 wherein compressing the insert (26) and defining an inner support structure (60) in the friction enhanced tray comprises defining the inner support structure (60) above the insert (26) on a raised edge (14) disposed around the circumference of the insert (26).

10. The method of claim 9 wherein defining the inner support structure (60) above the insert (26) on a raised edge (14) disposed around the circumference of the insert (26) comprises defining a protrusion (62) along the length of the inner support structure (60).

11. The method of claim 7 further comprising defining a shaped smooth boundary portion (24) disposed around the textured relief (22) defined in the insert (26) and beneath the inner support structure (60).

12. The method of claim 7 wherein placing the insert (26) on top of a lower tool (28) portion of the compression molding apparatus (30) comprises placing a sheet of thermoplastic polyurethane (TPU) on top of the lower tool (28) portion of the compression molding apparatus (30).

13. The method of claim 7 wherein defining a textured relief (22) within the insert (26) comprises asymmetrically defining a plurality of raised protrusions (62) and a plurality of recessed indentations into a surface of the insert (26).

## Patentansprüche

1. Serviertablett (10), umfassend:
eine obere Oberfläche (12);
eine untere Oberfläche (18), die auf einer gegenüberliegenden Seite der oberen Oberfläche (12) angeordnet ist;
eine erhöhte Kante (14), die um die obere Oberfläche (12) angeordnet ist;
mindestens zwei längliche Lippen (16), die innerhalb der erhöhten Kante (14) angeordnet sind;
ein strukturiertes Relief (22), das in der oberen Oberfläche (12) definiert ist,
wobei die obere Oberfläche (12) und die untere Oberfläche (18) aus mindestens einem synthetischen Material bestehen;
**dadurch gekennzeichnet, dass** es ferner eine innere Stützstruktur (60), die um den Umfang der oberen Oberfläche (12) angeordnet ist, umfasst; wobei das strukturierte Relief (22) aus einem Einsatz (26) besteht, der mit dem mindestens einen synthetischen Material einstückig verbunden ist, und das Tablett (10) aus einer Vielzahl von synthetischen Schichten besteht, die mindestens zwei Schichten zufällig verteilter und kontinuierlicher Glasfaserfilamentplatten, mindestens zwei Schichten gekreuzter ineinandergreifender Glasfaserplatten mit einem chemischen Bindemittel und eine Zwischenschicht aus Polycarbonatharz umfassen.

2. Tablett (10) nach Anspruch 1, wobei der Einsatz (26), der einstückig mit dem mindestens einen synthetischen Material verbunden ist, aus einer Folie aus thermoplastischem Polyurethan (TPU) besteht.

3. Tablett (10) nach Anspruch 1, wobei die innere Stützstruktur (60) einen Vorsprung (62) in ihrer Oberfläche aufweist, der eine nach oben gerichtete Kante um den Umfang der oberen Oberfläche (12) bereitstellt.

4. Tablett (10) nach Anspruch 1, wobei die innere Stützstruktur (60) an der erhöhten Kante (14) und über der oberen Oberfläche (12) angeordnet ist.

5. Tablett (10) nach Anspruch 1, ferner umfassend einen geformten glatten Grenzabschnitt (24), der zwischen der strukturierten Oberfläche (22) und der inneren Stützstruktur (60) an der erhöhten Kante (14) auf der oberen Oberfläche (12) angeordnet ist.

6. Tablett (10) nach Anspruch 1, wobei das strukturierte Relief (22) eine Vielzahl von erhöhten Vorsprüngen (62) und eine Vielzahl von vertieften Kerben umfasst, die asymmetrisch über der oberen Oberfläche (12) angeordnet sind.

7. Verfahren zur Herstellung eines reibungsverstärkten Tabletts in einer Druckformvorrichtung (30), **dadurch gekennzeichnet, dass** es
Platzieren eines Einsatzes (26) auf einem unteren Werkzeugabschnitt der Druckformvorrichtung (30);
Auftragen von mindestens zwei Schichten zufällig verteilter und kontinuierlicher Glasfaserfilamentplatten auf den Einsatz (26);
Auftragen von mindestens zwei Schichten gekreuzter, ineinandergreifender Glasfaserplatten, mit einem chemischen Bindemittel auf den Einsatz (26);
Anordnen einer Zwischenschicht aus Polycarbonatharz zwischen den mindestens zwei Schichten von gekreuzten ineinandergreifenden Glasfaserplatten, mit einem chemischen Bindemittel;
Komprimieren des Einsatzes (26), der mindestens zwei Schichten zufällig verteilter und kontinuierlicher Glasfaserfilamentplatten, der mindestens zwei Schichten kreuz und quer ineinandergreifender Glasfaserplatten mit einem chemischen Bindemittel und der Zwischenschicht aus Polycarbonatharz gegen den unteren Werkzeugabschnitt (28) der Druckformvorrichtung (30) und Definieren einer inneren Stützstruktur (60) in dem reibungsverstärkten Tablett; und Definieren eines strukturierten Reliefs (22) innerhalb des Einsatzes (28), umfasst.

8. Verfahren nach Anspruch 7, wobei das Definieren des strukturierten Reliefs (22) innerhalb des Einsatzes (26) das Einprägen einer chemisch geätzten Formoberfläche, die auf dem unteren Werkzeugabschnitt (28) angeordnet ist, in eine Oberfläche des Einsatzes (26) umfasst.

9. Verfahren nach Anspruch 7, wobei das Komprimieren des Einsatzes (26) und das Definieren einer inneren Stützstruktur (60) in dem reibungsverstärkten Tablett das Definieren der inneren Stützstruktur (60) über dem Einsatz (26) an einer erhöhten Kante (14) umfasst, die um den Umfang des Einsatzes (26) angeordnet ist.

10. Verfahren nach Anspruch 9, wobei das Definieren der inneren Stützstruktur (60) über dem Einsatz (26) an einer erhöhten Kante (14), die um den Umfang des Einsatzes (26) angeordnet ist, das Definieren eines Vorsprungs (62) entlang der Länge der inneren Stützstruktur (60) umfasst.

11. Verfahren nach Anspruch 7, ferner umfassend das Definieren eines geformten glatten Grenzabschnitts (24), der um das im Einsatz (26) und unter der inneren Stützstruktur (60) definierte strukturierte Relief (22) angeordnet ist.

12. Verfahren nach Anspruch 7, wobei das Platzieren des Einsatzes (26) auf einem unteren Werkzeugabschnitt (28) der Druckformvorrichtung (30) das Platzieren einer Folie aus thermoplastischem Polyurethan (TPU) auf dem unteren Werkzeugabschnitt (28) der Druckformvorrichtung (30) umfasst.

13. Verfahren nach Anspruch 7, wobei das Definieren eines strukturierten Reliefs (22) innerhalb des Einsatzes (26) das asymmetrische Definieren einer Vielzahl von erhöhten Vorsprüngen (62) und einer Vielzahl von vertieften Kerben in eine Oberfläche des Einsatzes (26) umfasst.

## Revendications

1. Plateau (10) de service comprenant:
Une surface (12) supérieure;
Une surface (18) inférieure disposée sur un côté opposé de la surface (12) supérieure;
Un bord (14) surélevé disposé autour de la surface (12) supérieure;
Au moins deux lèvres (16) allongées disposées à l'intérieur du bord (14) surélevé;
Un relief (22) texturé défini dans la surface (12) supérieure,
Dans lequel La surface (12) supérieure et la surface (18) inférieure sont constituées d'au moins un matériau synthétique,
**Caractérisé en ce qu'**il comprend en outre une structure (60) de support interne disposée circonférentiellement autour de la surface (12) supérieure; étant que le relief (22) texturé est constitué d'un insert (26) lié intégralement avec l'au moins un matériau synthétique et que le plateau (10) est composé d'une pluralité de couches synthétiques, comprenant au moins deux couches de feuilles de filament de fibre de verre réparties de façon aléatoire et continue, au moins deux couches de feuilles de fibre de verre s'enclenchant entrecroisées avec un liant chimique et une couche interstitielle en résine de polycarbonate.

2. Plateau (10) selon la revendication 1, dans lequel l'insert (26) lié intégralement l'au moins un matériau synthétique est constitué d'une feuille de polyuréthane thermoplastique (TPU).

3. Plateau (10) selon la revendication 1, dans lequel la structure (60) de support interne comprend une saillie (62) dans sa surface, qui fournit un bord orienté vers le haut, autour de la circonférence de la surface (12) supérieure.

4. Plateau (10) selon la revendication 1, dans lequel la structure (60) de support interne est disposée sur le bord (14) surélevé et au-dessus de la surface (12) supérieure.

5. Plateau (10) selon la revendication 1, comprenant en outre une partie (24) de limite lisse profilée, disposée entre la surface (22) texturée et la structure (60) de support interne sur le bord (14) surélevé sur la surface (12) supérieure.

6. Plateau (10) selon la revendication 1, dans lequel le relief (22) texturé comprend une pluralité de saillies (62) surélevées et une pluralité d'indentations évidées, disposées de manière asymétrique sur la surface (12) supérieure.

7. Procédé de fabrication d'un plateau à friction améliorée, dans un appareil (30) de moulage par compression, **caractérisé en ce qu'**il comprend:
Placer un insert (26) au-dessus d'une partie d'outil inférieure de l'appareil (30) de moulage par compression;
Superposer au moins deux couches de feuilles de filament de fibre de verre réparties de façon aléatoire et continue sur le dessus de l'insert (26);
Superposer au moins deux couches de feuilles de fibres de verre s'enclenchant entrecroisées avec un liant chimique sur le dessus de l'insert (26);
Disposer une couche interstitielle de résine de polycarbonate entre les au moins deux couches de feuilles de fibres de verre s'enclenchant entrecroisées avec un liant chimique;
Comprimer l'insert (26), des deux couches au moins de feuilles de filament de fibre de verre réparties de façon aléatoire et continue, les au moins deux couches de feuilles de fibre de verre s'enclenchant entrecroisées avec un liant chimique et la couche interstitielle de résine polycarbonate, contre la partie de l'outil (28) inférieur de l'appareil (30) de moulage par compression et définissant une structure (60) de support interne dans le plateau à friction améliorée; et
Définir un relief (22) texturé à l'intérieur de l'insert (26).

8. Procédé selon la revendication 7, dans lequel la définition du relief (22) texturé à l'intérieur de l'insert (26) comprend l'impression d'une surface de moule gravée chimiquement, disposée sur la partie de l'outil (28) inférieur dans une surface de l'insert (26).

9. Procédé selon la revendication 7, dans lequel la compression de l'insert (26) et la définition d'une structure (60) de support interne dans le plateau à friction améliorée comprend la définition de la structure (60) de support interne au-dessus de l'insert (26) sur un bord (14) surélevé disposé autour de la circonférence de l' insert (26).

10. Procédé selon la revendication 9, dans lequel la définition de la structure (60) de support interne au-dessus de l'insert (26) sur un bord (14) surélevé disposé autour de la circonférence de l'insert (26) comprend la définition d'une saillie (62) sur la longueur de la structure (60) de support interne.

11. Procédé selon la revendication 7, comprenant en outre la définition d'une partie (24) de limite lisse profilée, disposée autour du relief (22) texturé défini dans l'insert (26) et sous la structure (60) de support interne.

12. Procédé selon la revendication 7, dans lequel le placement de l'insert (26) au-dessus d'une partie de l'outil (28) inférieur de l'appareil (30) de moulage par compression comprend le placement d'une feuille de polyuréthane thermoplastique (TPU) au-dessus de la partie de l'outil (28) inférieur de l'appareil (30) de moulage par compression.

13. Procédé selon la revendication 7, dans lequel la définition d'un relief (22) texturé à l'intérieur de l'insert (26) comprend la définition asymétrique d'une pluralité de saillies (62) surélevées et d'une pluralité d'indentations évidées dans une surface de l'insert (26).
